# EUROPÄISCHE PATENTSCHRIFT

(11) **EP 2 278 758 B1**
(45) Veröffentlichungstag und Bekanntmachung des Hinweises auf die Patenterteilung: **07.05.2014**
(21) Anmeldenummer: 10004813.1
(22) Anmeldetag: 06.05.2010
(51) Int. Cl.: H04L 12/911, H04L 12/927

(54) **Prioritätsbasiertes Kommunikationsnetzwerk und Kommunikationsverfahren**
Priority-based communications network and communications method
Réseau de communication basé sur la priorité et procédé de communication

(30) Priorität: 10.07.2009 DE 102009032631
(43) Veröffentlichungstag der Anmeldung: 26.01.2011
(73) Patentinhaber: Rohde & Schwarz GmbH & Co. KG, 81671 München (DE)
(72) Erfinder: Bäßler, Andreas, 85221 Dachau (DE); Geistanger, Martin, 81477 München (DE)
(74) Vertreter: Körfer, Thomas

(56) Entgegenhaltungen:
- US-A- 5 896 567
- US-B1- 6 477 147
- BROOKS C A ET AL: "Effect of the token holding timer on MAP performance", INFOCOM '89. PROCEEDINGS OF THE EIGHTH ANNUAL JOINT CONFERENCE OF THE IEEE COMPUTER AND COMMUNICATIONS SOCIETIES. TECHNOLOGY: EMERGING OR CO NVERGING, IEEE OTTAWA, ONT., CANADA 23-27 APRIL 1989, WASHINGTON, DC, USA,IEEE COMPUT. SOC. PR, US, 23. April 1989 (1989-04-23), Seiten 342-347, XP010015382, DOI: DOI:10.1109/INFCOM.1989.101473 ISBN: 978-0-8186-1920-5

## Beschreibung

Die Erfindung betrifft ein Kommunikationsnetzwerk und ein Kommunikationsverfahren, insbesondere ein digitales prioritätsbasiertes Kommunikationsnetzwerk und Kommunikationsverfahren.

Herkömmlich werden in digitalen Kommunikationsnetzwerken Verbindungen zwischen Teilnehmern aufgebaut. Dabei bleiben die Verbindungen so lange bestehen, wie die verbundenen Teilnehmer Nachrichten austauschen. So wird z.B. bei dem Übertragungsverfahren, welches in der US 7,007,218 B2 näher beschrieben ist, eine bestehende Verbindung zwischen zwei Teilnehmern erst dann beendet, wenn keiner der beiden Teilnehmer weitere Nachrichten zu übermitteln hat. Nachteilhaft ist hieran, dass die beiden Teilnehmer während die Verbindung besteht, für andere Teilnehmer nicht erreichbar sind. Dies ist insbesondere dann problematisch, wenn die beiden verbundenen Teilnehmer lediglich Nachrichten geringer Priorität austauschen. In diesem Fall sind die Teilnehmer nicht für andere Teilnehmer, welche Nachrichten hoher Priorität an sie senden wollen, erreichbar. Vor allem problematisch ist dies, wenn die beiden verbundenen Teilnehmer eine große Menge an Nachrichten geringer Priorität zu übertragen haben und damit den Kommunikationskanal für eine lange Zeit blockieren.

Die US 6 477 147 B1 beschreibt, wie ein Datenpaket über Ethernet von einem ersten Gerät zu einem oder mehreren anderen Geräten geschickt wird. Dem Datenpaket wird eine Priorität zugewiesen. Dadurch sollen bestimmte zeitliche bzw. statistische Spezifikationen erfüllt werden. Nachteilig ist, dass es möglich ist, dass, falls ein Teilnehmer mehrere Datenpakete mit sehr hoher Priorität senden will, dieser das komplette Netzwerk blockiert.

Der Erfindung liegt die Aufgabe zu Grunde, ein Kommunikationsnetzwerk und ein Kommunikationsverfahren zu schaffen, welche eine zuverlässige zeitnahe Übertragung von Nachrichten hoher Priorität sicherstellen.

Die Aufgabe wird erfindungsgemäß für das
Kommunikationsnetzwerk durch die Merkmale des unabhängigen Anspruchs 1 und für das Verfahren durch die Merkmale des unabhängigen Anspruchs 10 gelöst. Vorteilhafte Weiterbildungen sind Gegenstand der hierauf rückbezogenen Unteransprüche.

Ein erfindungsgemäßes Kommunikationsnetzwerk beinhaltet zumindest einen ersten Teilnehmer und einen zweiten Teilnehmer. Die Teilnehmer bauen paarweise Verbindungen zueinander auf. Die verbundenen Teilnehmer übertragen über die Verbindung Nachrichten. Jeder Nachricht ist dabei eine Priorität zugewiesen. Zumindest ein verbundener Teilnehmer beendet die Verbindung nach dem Ablauf einer maximalen Verbindungszeit. Die maximale Verbindungszeit ist von der Priorität der zu übertragenden Nachrichten abhängig. So wird sichergestellt, dass Nachrichten geringer Priorität eine Verbindung nicht beliebig lange offen halten und damit den Übertragungskanal und die beteiligten Teilnehmer blockieren.

Bevorzugt baut der erste Teilnehmer die Verbindung auf. Bevorzugt ist die maximale Verbindungszeit von der Priorität der von dem ersten Teilnehmer zu übertragenden Nachrichten abhängig. So wird erreicht, dass bereits vor Aufbau einer Verbindung die maximale Verbindungszeit dieser Verbindung klar definiert ist.

Der erste Teilnehmer weist bevorzugt der Verbindung in Abhängigkeit der Priorität der von ihm zu übertragenden Nachrichten eine Priorität zu. Die maximale Verbindungszeit ist bevorzugt von der Priorität der Verbindung abhängig. So wird eine Bestimmung der maximalen Verbindungszeit basierend auf Nachrichten
unterschiedlicher Priorität, welche über eine gemeinsame Verbindung übertragen werden, möglich.

Vorteilhafterweise initiiert der erste Teilnehmer während einer ersten Wartezeit nach der Beendigung der Verbindung keine Verbindungen. So wird sichergestellt, dass der erste Teilnehmer zumindest für eine gewisse Zeit nach Beendigung einer Verbindung erreichbar ist.

Der Teilnehmer, welcher die Verbindung beendet hat, initiiert bevorzugt während einer ersten Wartezeit keine Verbindung zu dem anderen ehemals verbundenen Teilnehmer. Der Teilnehmer, welche die Verbindung nicht beendet hat initiiert bevorzugt während einer zweiten Wartezeit keine Verbindung zu dem anderen ehemals verbundenen Teilnehmer. Die erste Wartezeit ist dabei bevorzugt kürzer, als die zweite Wartezeit. So wird erreicht, dass auch andere Teilnehmer zum Zuge kommen. Eine Kollision von Verbindungsanfragen wird so weiterhin vermieden.

Vorteilhafterweise initiiert der erste Teilnehmer während einer dritte Wartezeit nach der Beendigung der Verbindung keine Verbindungen. Die dritte Wartezeit ist dabei bevorzugt kürzer als die erste Wartezeit und die zweite Wartezeit. So wird erreicht, dass zunächst nicht kürzlich verbundene Teilnehmer zum Zuge kommen.

Bevorzugt übertragen der erste Teilnehmer und der zweite Teilnehmer innerhalb einer Verbindung Nachrichten unterschiedlicher Prioritäten. Bevorzugt bestimmt der erste Teilnehmer die Priorität der Verbindung nach der höchsten Priorität der von ihm zu übertragenden Nachrichten oder nach dem Durchschnitt der Prioritäten der von ihm zu übertragenden Nachrichten. So wird erreicht, dass die maximale Verbindungszeit derart bestimmt wird, dass Nachrichten nach ihrer Priorität gewichtet übertragen werden.

Jeder Teilnehmer beinhaltet vorteilhafterweise einen Sendeplaner. Der Sendeplaner sortiert zu sendende Nachrichten bevorzugt nach ihrem Ziel und/oder ihrer Priorität. Der Sendeplaner bestimmt bevorzugt die Reihenfolge aufzubauender Verbindungen. So wird eine zuverlässige, ressourcenschonende Sendungsplanung erreicht.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein erstes beispielhaftes Kommunikationsnetzwerk;
- Fig. 2: ein zweites beispielhaftes Kommunikationsnetzwerk;
- Fig. 3: einen beispielhaften Verlauf einer Übertragung bei einem ersten Ausführungsbeispiel des erfindungsgemäßen Kommunikationsnetzwerks;
- Fig. 4: ein zweites Ausführungsbeispiel des erfindungsgemäßen Kommunikationsnetzwerks in einer Detailansicht, und
- Fig. 5: ein Flussdiagramm eines Ausführungsbeispiels des erfindungsgemäßen Verfahrens.

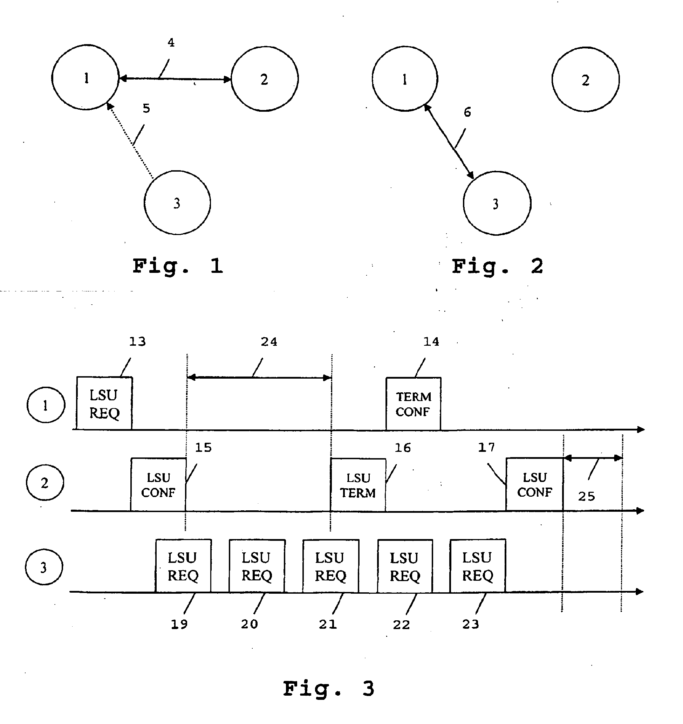

Zunächst wird anhand der Fig. 1 - 2 die der gegenwärtigen Erfindung zu Grunde liegende Problematik erläutert. Mittels Fig. 3 - 5 wird anschließend der Aufbau des erfindungsgemäßen Kommunikationsnetzwerks und die Funktionsweise des erfindungsgemäßen
Kommunikationsnetzwerks und Verfahrens dargestellt. Identische Elemente wurden in ähnlichen Abbildungen zum Teil nicht wiederholt dargestellt und beschrieben.

Fig. 1 zeigt ein erstes beispielhaftes Kommunikationsnetzwerk. Es beinhaltet die Teilnehmer 1, 2 und 3. Zwischen den Teilnehmern 1 und 2 ist eine Verbindung 4 aufgebaut. Die Teilnehmer 1 und 2 tauschen über die Verbindung 4 Nachrichten aus. Bei einem herkömmlichen Kommunikationsnetzwerk bleibt die Verbindung 4 so lange bestehen, wie die Teilnehmer 1 und 2 Nachrichten austauschen. Ein vorzeitiger absichtlicher Verbindungsabbruch findet nicht statt. Übertragen die Teilnehmer 1 und 2 lediglich Nachrichten geringer Priorität, so sind sie auch für Nachrichten höherer Priorität für den Zeitraum des Bestehens der Verbindung 4 nicht erreichbar. So strebt beispielsweise der Teilnehmer 3 eine Verbindung 5 zu dem Teilnehmer 1 an. Der Teilnehmer 3 hat Nachrichten von hoher Priorität an den Teilnehmer 1 zu senden. Eine solche Verbindung kann jedoch erst dann aufgebaut werden, wenn die Verbindung 4 zwischen den Teilnehmern 1 und 2 beendet wurde. Dies geschieht jedoch erst, nachdem sowohl der Teilnehmer 1 wie auch der Teilnehmer 2 keine weiteren Nachrichten an den jeweiligen anderen Teilnehmer zu senden haben.

Fig. 2 zeigt ein zweites beispielhaftes Kommunikationsnetzwerk. Das hier gezeigte Kommunikationsnetzwerk entspricht weitgehend dem in Fig. 1 gezeigten Kommunikationsnetzwerk. Die Verbindung 4 aus Fig. 1 wurde hier bereits beendet. Anschließend hat der Teilnehmer 3 eine Verbindung 6 zu dem Teilnehmer 1 aufgebaut.

Werden die Teilnehmer 1, 2 und 3 aus den Fig. 1 und Fig. 2 mit einem erfindungsgemäßen Kommunikationsnetzwerk verbunden, so tritt der problematische Fall der Blockierung durch Nachrichten geringer Priorität nicht auf. Die Verbindung 4 zwischen den Teilnehmern 1 und 2, über welche lediglich Nachrichten geringer Priorität übertragen werden, wird dort automatisch nach Ablauf einer bestimmten maximalen Verbindungszeit beendet. Dies erfolgt auch dann, wenn die Teilnehmer 1 und 2 noch Nachrichten zu senden haben. Der Teilnehmer 3, welcher Nachrichten hoher Priorität zu senden hat, kann nun bereits zum Zuge kommen und eine Verbindung 6 zu Teilnehmer 2 aufbauen.

In Fig. 3 wird der Ablauf einer Kommunikation in einem erfindungsgemäßen Kommunikationsnetzwerk gezeigt. Dargestellt wird hier der Fall einer von Teilnehmer 1 zu Teilnehmer 2 aufgebauten Verbindung und einem zwischenzeitlich entstehenden Verbindungswunsch des Teilnehmers 3 zu dem Teilnehmer 2. Der Teilnehmer 1 sendet zunächst eine Verbindungsanfrage 13 an den Teilnehmer 2. Der Teilnehmer 2 ist verfügbar und sendet direkt im Anschluss eine Verbindungsbestätigung 15 an den Teilnehmer 1. Eine Verbindung zwischen den Teilnehmern 1 und 2 ist somit zustande gekommen. Ausgehend von der Priorität der von dem Teilnehmer 1 zu sendenden Nachrichten bestimmen die Teilnehmer 1 und 2 eine maximale Verbindungszeit 24. Eine Bestimmung der maximalen Verbindungszeit durch den Teilnehmer 1 alleine oder durch den Teilnehmer 2 alleine und eine Übertragung an den anderen Teilnehmer ist ebenfalls denkbar. Während dieser maximalen Verbindungszeit 24 wechseln sich die Teilnehmer 1 und 2 beim Senden auf dem Kanal ab. Sobald die maximale Verbindungszeit 24 abgelaufen ist, sendet der Teilnehmer welcher als nächstes an der Reihe ist zu senden, ein Verbindungsabbruchsignal 16 an den anderen Teilnehmer. In diesem Fall sendet der Teilnehmer 2 das Verbindungsabbruchsignal 16 an den Teilnehmer 1. Der Teilnehmer 1 bestätigt den Abbruch der Verbindung mittels eines Abbruchbestätigungssignals 14.

Bereits während der Übertragung der Verbindungsbestätigung 15 von dem Teilnehmer 2 an den Teilnehmer 1 versucht der Teilnehmer 3 eine Verbindung zu dem Teilnehmer 2 herzustellen. Hierzu sendet er wiederholt Verbindungsanfragen 19, 20, 21, 22. Diese Signale werden jedoch von dem Teilnehmer 2 nicht beantwortet, da dieser mit seiner Verbindung zu dem Teilnehmer 1 beschäftigt ist. Erst nach Beendigung der Verbindung der Teilnehmer 1 und 2 reagiert der Teilnehmer 2 auf eine Verbindungsanfrage 23 des Teilnehmers 3 mit einer Verbindungsbestätigung 17. Solange die Teilnehmer 2 und 3 über zu sendende Nachrichten verfügen, bleibt die Verbindung bestehen, bis eine maximale Verbindungszeit 25 erreicht ist. Die maximale Verbindungszeit 25 ist deutlich kürzer als die maximale Verbindungszeit 24. Dies liegt daran, dass die in diesem Beispiel von dem Teilnehmer 3 zu übertragenden Nachrichten eine deutlich geringere Priorität haben als die von dem Teilnehmer 1 zu übertragenden Nachrichten hatten. Die Prioritäten der Nachrichten entsprechen dabei beispielsweise ganzzahligen numerischen Werten. Ein niedriger Wert, z.B. 1, entspricht einer hohen Priorität. Pro Prioritätsstufe ergibt sich dabei beispielsweise eine Verdopplung der maximalen Verbindungszeit. Damit ist die maximale Verbindungszeit, z.B. bei dem Prioritätswert von 1 doppelt so hoch wie bei einem Prioritätswert von 2 und viermal so hoch wie bei einem Prioritätswert von 3. Abweichende Abstufungen der maximalen Verbindungszeit sind jedoch ebenfalls denkbar.

Nach Beendigung einer Verbindung, hier z.B. die Verbindung zwischen Teilnehmer 1 und Teilnehmer 2 initiieren die ehemals verbundenen Teilnehmer von sich aus während einer dritte Wartezeit keine Verbindungen. Dies ermöglicht, dass andere Teilnehmer die ehemals verbundenen Teilnehmer 1 und 2 erreichen können, ohne dass diese ihnen zuvorkommen. Die Teilnehmer 1 und 2 initiieren außerdem innerhalb einer erste Wartezeit keine Verbindungen zueinander. So wird gewährleistet, dass auch andere Datenströme zum Zuge kommen können. Die erste Wartezeit ist dabei größer als die zweite Wartezeit. Um Kollisionen von Verbindungsanfragen der Teilnehmer 1 und 2 zu vermeiden, initiiert der Teilnehmer 1, welcher die Verbindung nicht beendet hat, innerhalb einer zweite Wartezeit keine Verbindung zu dem ehemals verbundenen Teilnehmer 2. Die zweite Wartezeit ist dabei länger als die erste Wartezeit.

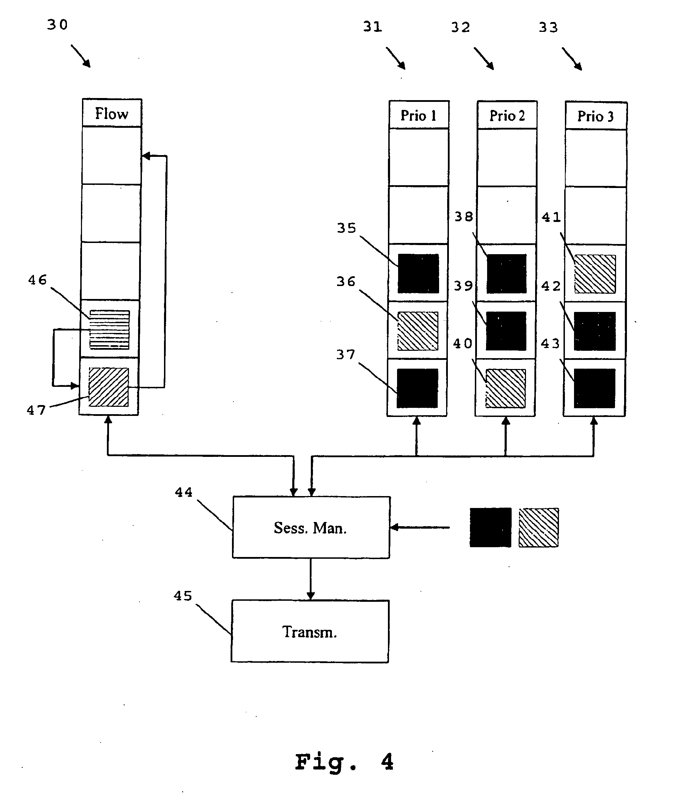

In Fig. 4 wird in einer Detailansicht ein Teil eines Teilnehmers gezeigt. Der Teilnehmer verfügt über einen Übertragungsfluss-Stapel 30 und drei Prioritätsstapel 31, 32, 33. Der Übertragungsfluss-Stapel 30 und die Prioritätsstapel 31, 32 und 33 sind dabei mit einem Sendeplaner 44 verbunden. Der Sendeplaner 44 ist weiterhin mit einem Sender 45 verbunden.

Die Prioritätsstapel 31, 32, 33 dienen dabei dem Sortieren von Nachrichten 35 - 43 nach ihrer Priorität. So werden Nachrichten 35, 36, 37 hoher Priorität in dem Prioritätsstapel 31 abgelegt. Nachrichten 38, 39, 40 mittlerer Priorität werden in dem Prioritätsstapel 32 abgelegt. Nachrichten 41, 42, 43 niedriger Priorität werden in dem Prioritätsstapel 33 abgelegt. Eine Sortierung nach dem Ziel der Nachrichten erfolgt dabei nicht. So sind die Nachrichten 36, 40 und 41 an einen ersten Teilnehmer zu übertragen, während die Nachrichten 35, 37, 38, 39, 42 und 43 an einen zweiten Teilnehmer zu übertragen sind.

Der Sendeplaner 44 empfängt dabei die zu sendenden Nachrichten 35 - 43. Das Sortieren der Nachrichten 35 - 43 auf die Prioritätsstapel 31, 32, 33 erfolgt direkt nach dem Empfang der Nachrichten 35 - 43 durch den Sendeplaner 44.

Der Übertragungsfluss-Stapel 30 dient der Ablage von Übertragungsflüssen 46, 47. Ein Übertragungsfluss 46, 47 beinhaltet dabei Nachrichten 35 - 43 unterschiedlicher Prioritäten an einen Zielteilnehmer. Der Sendungsplaner 44 ordnet dabei die Nachrichten 35 - 43 den
Übertragungsflüssen 46, 47 je nach ihrem Zielteilnehmer zu. Liegt bereits ein Übertragungsfluss 46, 47 zu dem Zielteilnehmer der jeweiligen Nachrichten 35 - 43 vor, so wird die Nachricht 35 - 43 dem Übertragungsfluss 46, 47 hinzugefügt. Wird kein zugehöriger Übertragungsfluss 46, 47 in dem Übertragungsfluss-Stapel 30 gefunden, erstellt der Sendungsplaner 44 einen neuen Eintrag mit dem Zielteilnehmer und der Priorität der Nachricht 35 - 43 und fügt ihn am Ende des Übertragungsfluss-Stapels 30 an.

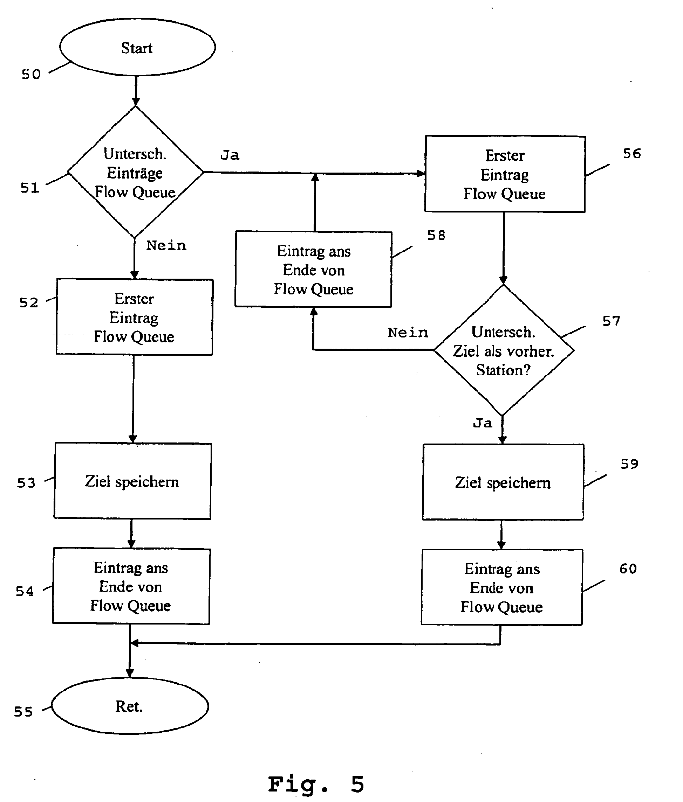

Der Sendungsplaner 44 wählt weiterhin aus dem Übertragungsfluss-Stapel 30 aus, welcher Übertragungsfluss 46, 47 als nächstes gesendet werden soll. Dabei berücksichtigt er die anhand von Fig. 3 gezeigten Wartezeiten. Auf die Auswahl des als nächstes zu sendenden Übertragungsflusses 46, 47 wird anhand der Fig. 5 näher eingegangen.

Hat der Sendungsplaner 44 einen Übertragungsfluss 46, 47, welcher als nächstes gesendet werden soll ausgewählt, so überträgt er ihn an den Sender 45. Der Sender 45 stellt eine Verbindung zu dem Zielteilnehmer her und sendet den Übertragungsfluss 46, 47 aus. Alternativ übergibt der Sendeplaner 44 dem Sender 45 die Zieladresse des Übertragungsflusses 46, 47 in einem gemeinsamen Speicher.

In Fig. 5 wird in einem Blockdiagramm ein
Ausführungsbeispiel des erfindungsgemäßen Verfahrens gezeigt. Es wird hier davon ausgegangen, dass zu übertragende Nachrichten lediglich an einer Stelle in einem gemeinsamen Speicher des jeweiligen Teilnehmers gespeichert sind. In dem Übertragungsfluss-Stapel 30 und den Prioritätsstapeln 31, 32, 33 aus Fig. 4 sind lediglich Zeiger auf den tatsächlichen Speicherort abgelegt. Ausgegangen wird dabei von einem Startzustand 50. In einem ersten Schritt 51 wird ermittelt, ob sich in dem Übertragungsfluss-Stapel 30 unterschiedliche Einträge befinden. Ist dies nicht der Fall, wird in einem zweiten Schritt 52 der erste Eintrag des Übertragungsfluss-Stapels 30 ausgewählt. In einem dritten Schritt 53 wird das Ziel des dort gespeicherten Zeigers gespeichert. In einem vierten Schritt 54 wird der Eintrag ans Ende des Übertragungsfluss-Stapels 30 verschoben. In einem abschließenden fünften Schritt 55 wird das gespeicherte Ziel rückübertragen, d.h. der Sender 45 aus Fig. 4 erhält einen Zeiger auf die zu sendenden Nachrichten.

Liegen im ersten Schritt 51 unterschiedliche Einträge des Übertragungsfluss-Stapels 30 vor, so wird mit einem sechsten Schritt 56 fortgefahren. Auch hier wird der erste Eintrag des Übertragungsfluss-Stapels 30 ausgewählt. In einem siebten Schritt 57 wird ermittelt, ob der Zielteilnehmer dieses Eintrags von dem zuvor kontaktierten Zielteilnehmer abweicht. Ist dies nicht der Fall, wird der Eintrag in einem achten Schritt 58 ans Ende des Übertragungsfluss-Stapels 30 verschoben. Es wird dann mit dem sechsten Schritt 56 fortgefahren. Unterscheidet sich in siebten Schritt 57 jedoch der Zielteilnehmer von dem vorherigen Zielteilnehmer, so wird mit einem neunten Schritt 59 fortgefahren. Wie auch im dritten Schritt 53, wird hier die Zieladresse der zu übertragenden Nachricht gespeichert. In einem zehnten Schritt 60 wird anschließend der gegenwärtige Eintrag ans Ende des Übertragungsfluss-Stapels 30 verschoben. Fortgefahren wird an dieser Stelle mit dem bereits beschriebenen fünften Schritt 55.

Es wird somit eine Zieladresse im Speicher, an welcher die als nächstes zu übertragende Nachrichten gespeichert sind übertragen. Es wird so erreicht, dass abwechselnd unterschiedliche Zielteilnehmer ausgewählt werden. Die Priorität der zu übertragenden Nachrichten spielt bei der Auswahl des nächsten Zielteilnehmers keine Rolle. Die Priorität wird lediglich eingesetzt, um die maximale Verbindungszeit zu bestimmen. Ist eine Verbindung einmal aufgebaut, werden über die Verbindung sämtliche vorhandene Nachrichten übertragen, bis die maximale Verbindungszeit abgelaufen ist. Dabei spielt die Priorität der vorhandenen Nachrichten ebenfalls keine Rolle, d.h. zwischen Nachrichten unterschiedlicher Prioritäten wird gleichmäßig abgewechselt.

Die Erfindung ist nicht auf das dargestellte Ausführungsbeispiel beschränkt. Wie bereits erwähnt, können unterschiedliche Übertragungsverfahren erfindungsgemäß modifiziert werden. Ein Einsatz mit verschiedensten Kommunikationsgeräten ist denkbar. Alle vorstehend beschriebenen Merkmale oder in den Figuren gezeigten Merkmale sind im Rahmen der Erfindung beliebig vorteilhaft miteinander kombinierbar.

## Patentansprüche

1. Kommunikationsnetzwerk mit zumindest einem ersten Teilnehmer (1, 2, 3) und einem zweiten Teilnehmer (1, 2, 3),
wobei das Kommunikationsnetzwerk derart ausgebildet ist,
dass die Teilnehmer (1, 2, 3) paarweise jeweils eine Verbindung (4, 6) zueinander aufbauen,
dass die verbundenen Teilnehmer (1, 2, 3) über die Verbindung (5, 6) Nachrichten (35 - 43) übertragen,
wobei jeder Nachricht (35 - 43) eine Priorität zugewiesen ist, wobei zumindest ein verbundener Teilnehmer (2) die Verbindung (5, 6) nach dem Ablauf einer maximalen Verbindungszeit (24, 25) beendet,
dass die maximale Verbindungszeit (24, 25) von der Priorität der zu übertragenden Nachrichten (35 - 43) abhängig ist,
dass der Teilnehmer (2), welcher die Verbindung (4) beendet hat, während einer ersten Wartezeit keine Verbindung (4, 5) zu dem anderen ehemals verbundenen Teilnehmer (1) initiiert,
**dadurch gekennzeichnet,**
**dass** der andere ehemals verbundene Teilnehmer (1) während einer zweiten Wartezeit keine Verbindung (4, 5) zu dem Teilnehmer (2), welcher die Verbindung (4) beendet hat, initiiert, und
**dass** die erste Wartezeit kürzer ist als die zweite Wartezeit.

2. Kommunikationsnetzwerk nach Anspruch 1,
**dadurch gekennzeichnet,**
**dass** der erste Teilnehmer (1, 3) die Verbindung aufbaut, und
**dass** die maximale Verbindungszeit (24, 25) von der Priorität der von dem ersten Teilnehmer (1, 3) zu übertragenden Nachrichten (35 - 43) abhängig ist.

3. Kommunikationsnetzwerk nach Anspruch 1 oder 2,
**dadurch gekennzeichnet,**
**dass** der erste Teilnehmer (1, 3) der Verbindung (5, 6) in Abhängigkeit der Priorität der von dem ersten Teilnehmer (1, 3) zu übertragenden Nachrichten (35 - 43) eine Priorität zuweist, und
**dass** die maximale Verbindungszeit (24, 25) von der Priorität der Verbindung (5, 6) abhängig ist.

4. Kommunikationsnetzwerk nach einem der Ansprüche 1 bis 3,
**dadurch gekennzeichnet,**
**dass** der erste Teilnehmer (1, 3) während einer dritten Wartezeit nach der Beendigung der Verbindung (4, 5) keine Verbindungen (4, 5) initiiert.

5. Kommunikationsnetzwerk nach einem der Ansprüche 1 bis 4,
**dadurch gekennzeichnet,**
**dass** der erste Teilnehmer (1, 3) während einer dritten Wartezeit nach der Beendigung der Verbindung (4, 5) keine Verbindungen (4, 5) initiiert, und
**dass** die dritte Wartezeit kürzer ist als die erste Wartezeit und die zweite Wartezeit.

6. Kommunikationsnetzwerk nach einem der Ansprüche 1 bis 5,
**dadurch gekennzeichnet,**
**dass** der erste Teilnehmer (1, 3) und der zweite Teilnehmer (2) innerhalb einer Verbindung (4, 5) Nachrichten unterschiedlicher Prioritäten übertragen, und
**dass** der erste Teilnehmer (1, 3) die Priorität der Verbindung (4, 5) nach der höchsten Priorität der von ihm zu übertragenden Nachrichten (35 - 43) oder nach dem Durchschnitt der Prioritäten der von ihm zu übertragenden Nachrichten (35 - 43) bestimmt.

7. Kommunikationsnetzwerk nach einem der Ansprüche 1 bis 6,
**dadurch gekennzeichnet,**
**dass** jeder Teilnehmer (1, 2, 3) einen Sendeplaner (44) beinhaltet, und
**dass** der Sendeplaner (44) zu sendende Nachrichten (35 - 43) nach ihrem Ziel und/oder ihrer Priorität sortiert.

8. Kommunikationsnetzwerk nach Anspruch 7,
**dadurch gekennzeichnet,**
**dass** der Sendeplaner (44) die Reihenfolge aufzubauender Verbindungen (4, 5) bestimmt.

9. Verfahren zur Kommunikation zwischen zumindest einem ersten Teilnehmer (1, 2, 3) und einem zweiten Teilnehmer (1, 2, 3),
wobei paarweise jeweils eine Verbindung (4, 5) zwischen den Teilnehmern (1, 2, 3) aufgebaut wird,
wobei Nachrichten (35 - 43) über die Verbindung (4, 5) zweier Teilnehmer (1, 2, 3) übertragen werden,
wobei jeder Nachricht (35 - 43) von einem Teilnehmer (1, 2, 3) eine Priorität zugewiesen wird,
wobei die Verbindung (4, 5) von zumindest einem verbundenen Teilnehmer (2) nach dem Ablauf einer maximalen Verbindungszeit (24, 25) beendet wird,
wobei die maximale Verbindungszeit (24, 25) von der Priorität der zu übertragenden Nachrichten (35 - 43) abhängig bestimmt wird und
wobei während einer ersten Wartezeit keine Verbindung (4, 5) von dem Teilnehmer (2), welcher die Verbindung (4) beendet hat, zu dem anderen ehemals verbundenen Teilnehmer (1) initiiert wird,
**dadurch gekennzeichnet,**
**dass** während einer zweiten Wartezeit keine Verbindung (4, 5) von dem anderen ehemals verbundenen Teilnehmer (1), zu dem Teilnehmer (2), welcher die Verbindung (4) beendet hat, initiiert wird, und
**dass** die erste Wartezeit kürzer ist als die zweite Wartezeit.

10. Verfahren nach Anspruch 9,
**dadurch gekennzeichnet,**
**dass** die Verbindung (4, 5) von dem ersten Teilnehmer (1, 3) aufgebaut wird, und
**dass** die maximale Verbindungszeit (24, 25) abhängig von der Priorität der von dem ersten Teilnehmer (1, 3) zu übertragenden Nachrichten (35 - 43) von dem ersten Teilnehmer (1, 3) bestimmt wird.

11. Verfahren nach Anspruch 9 oder 10,
**dadurch gekennzeichnet,**
**dass** der Verbindung (4, 5) in Abhängigkeit der Priorität der von dem ersten Teilnehmer (1, 3) zu übertragenden Nachrichten eine Priorität von dem ersten Teilnehmer (1, 3) zugewiesen wird, und
**dass** die maximale Verbindungszeit (24, 25) abhängig von der Priorität der Verbindung (4, 5) von dem ersten Teilnehmer (1, 3) bestimmt wird.

12. Verfahren nach einem der Ansprüche 9 bis 11,
**dadurch gekennzeichnet,**
**dass** während einer dritten Wartezeit nach der Beendigung der Verbindung (4, 5) keine Verbindungen (4, 5) von dem ersten Teilnehmer (1, 3) initiiert werden.

13. Verfahren nach einem der Ansprüche 9 bis 12,
**dadurch gekennzeichnet,**
**dass** während einer dritten Wartezeit nach der Beendigung der Verbindung (4, 5) keine Verbindungen von dem ersten (1, 3) Teilnehmer initiiert werden, und
**dass** die dritte Wartezeit kürzer ist als die erste Wartezeit und die zweite Wartezeit.

14. Verfahren nach einem der Ansprüche 9 bis 13,
**dadurch gekennzeichnet,**
**dass** innerhalb einer Verbindung (4, 5) Nachrichten (35 - 43) unterschiedlicher Prioritäten zwischen dem ersten Teilnehmer (1, 3) und dem zweiten Teilnehmer (2) übertragen werden, und
**dass** die Priorität der Verbindung (4, 5) nach der höchsten Priorität der von dem ersten Teilnehmer (1, 3) zu übertragenden Nachrichten (35 - 43) oder nach dem Durchschnitt der Prioritäten der von dem ersten Teilnehmer (1, 3) zu übertragenden Nachrichten (35 - 43) von dem ersten Teilnehmer (1, 3) bestimmt wird.

15. Verfahren nach einem der Ansprüche 9 bis 14,
**dadurch gekennzeichnet,**
**dass** zu sendende Nachrichten (35 - 43) nach ihrem Ziel und/oder ihrer Priorität sortiert werden.

16. Verfahren nach Anspruch 15,
**dadurch gekennzeichnet,**
**dass** die Reihenfolge aufzubauender Verbindungen (4, 5) von den Teilnehmern (1, 2, 3) bestimmt wird.

## Claims

1. Communications network with at least a first station (1, 2, 3) and a second station (1, 2, 3),
wherein the communications network being embodied in such a way
that the stations (1, 2, 3) set up a link (4, 6) to one another in pairs in each case,
that the linked stations (1, 2, 3) transmit messages (35 - 43) over the link (5, 6), each message (35 - 43) being assigned a priority,
that after a maximum link time (24, 25) has elapsed at least one linked station (2) terminates the link (5, 6),
that the maximum link time (24, 25) is dependent on the priority of the messages (35 - 43) to be transmitted,
that during a first waiting time the station (2) that terminated the link (4) initiates no link (4, 5) to the other formerly linked station (1),
**characterised in that** during a second waiting time the other formerly linked station (1) initiates no link (4, 5) to the station (2) that terminated the link (4), and
**in that** the first waiting time is shorter than the second waiting time.

2. Communications network according to claim 1,
**characterised in that** the first station (1, 3) sets up the link and
**in that** the maximum link time (24, 25) is dependent on the priority of the messages (35 - 43) to be transmitted by the first station (1, 3).

3. Communications network according to claim 1 or 2,
**characterised in that** the first station (1, 3) assigns the link (5, 6) a priority depending on the priority of the messages (35 - 43) to be transmitted by the first station (1, 3), and
**in that** the maximum link time (24, 25) is dependent on the priority of the link (5, 6).

4. Communications network according to one of claims 1 to 3,
**characterised in that** during a third waiting time after the termination of the link (4, 5) the first station (1, 3) initiates no links (4, 5).

5. Communications network according to one of claims 1 to 4,
**characterised in that** during a third waiting time after the termination of the link (4, 5) the first station (1, 3) initiates no links (4, 5), and
**in that** the third waiting time is shorter than the first waiting time and the second waiting time.

6. Communications network according to one of claims 1 to 5,
**characterised in that** the first station (1, 3) and the second station (2) transmit messages with different priorities within a link (4, 5), and
**in that** the first station (1, 3) determines the priority of the link (4, 5) according to the highest priority of the messages (35 - 43) to be transmitted by it or according to the average of the priorities of the messages (35 - 43) to be transmitted by it.

7. Communications network according to one of claims 1 to 6,
**characterised in that** each station (1, 2, 3) comprises a transmission planner (44), and
**in that** the transmission planner (44) sorts messages (35 - 43) to be transmitted according to their destination and/or their priority.

8. Communications network according to claim 7,
**characterised in that** the transmission planner (44) determines the sequence of links (4, 5) to be set up.

9. Method for communication between at least a first station (1, 2, 3) and a second station (1, 2, 3),
in which a link (4, 5) is set up between the stations (1, 2, 3) in pairs in each case,
in which messages (35 - 43) are transmitted over the link (4, 5) between two stations (1, 2, 3),
in which each message (35 - 43) is assigned a priority by a station (1, 2, 3),
in which after a maximum link time (24, 25) has elapsed the link (4, 5) is terminated by at least one linked station (2),
in which the maximum link time (24, 25) is determined depending on the priority of the messages (35 - 43) to be transmitted and
in which during a first waiting time no link (4, 5) is initiated by the station (2) that terminated the link (4) to the other formerly linked station (1),
**characterised in that** during a second waiting time no link (4, 5) is initiated by the other formerly linked station (1) to the station (2) that terminated the link (4), and
**in that** the first waiting time is shorter than the second waiting time.

10. Method according to claim 9,
**characterised in that** the link (4, 5) is set up by the first station (1, 3), and
**in that** the maximum link time (24, 25) is determined by the first station (1, 3) depending on the priority of the messages (35 - 43) to be transmitted by the first station (1, 3).

11. Method according to claim 9 or 10,
**characterised in that** the link (4, 5) is assigned a priority by the first station (1, 3) depending on the priority of the messages to be transmitted by the first station (1, 3), and
**in that** the maximum link time (24, 25) is determined by the first station (1, 3) depending on the priority of the link (4, 5).

12. Method according to one of claims 9 to 11,
**characterised in that** during a third waiting time after the termination of the link (4, 5) no links (4, 5) are initiated by the first station (1, 3).

13. Method according to one of claims 9 to 12,
**characterised in that** during a third waiting time after the termination of the link (4, 5) no links are initiated by the first station (1, 3), and
**in that** the third waiting time is shorter than the first waiting time and the second waiting time.

14. Method according to one of claims 9 to 13,
**characterised in that** messages (35 - 43) with different priorities are transmitted between the first station (1, 3) and the second station (2) within a link (4, 5), and
**in that** the priority of the link (4, 5) is determined by the first station (1, 3) according to the highest priority of the messages (35 - 43) to be transmitted by the first station (1, 3) or according to the average of the priorities of the messages (35 - 43) to be transmitted by the first station (1, 3).

15. Method according to one of claims 9 to 14,
**characterised in that** messages (35 - 43) to be transmitted are sorted according to their destination and/or their priority.

16. Method according to claim 15,
**characterised in that** the sequence of links (4, 5) to be set up is determined by the stations (1, 2, 3).

## Revendications

1. Réseau de communication comportant au moins un premier abonné (1, 2, 3) et un second abonné (1, 2, 3),
dans lequel le réseau de communication est réalisé de sorte que
les abonnés (1, 2, 3) établissent par paire une liaison respective (4, 6) entre eux,
les abonnés reliés (1, 2, 3) transmettent des messages (35-43) par l'intermédiaire de la liaison (5, 6), dans lequel une priorité est allouée à chaque message (35-43),
au moins un abonné relié (2) met fin à la liaison (5,6) après l'écoulement d'un temps de liaison maximal (24, 25),
le temps de liaison maximal (24, 25) dépend de la priorité des messages à transmettre (35-43),
l'abonné (2) qui a mis fin à la liaison (4), n'initie aucune liaison (4, 5) vers l'autre abonné (1) relié précédemment pendant un premier temps d'attente,
**caractérisé en ce que**
l'autre abonné précédemment relié (1) n'initie aucune liaison (4, 5) vers l'abonné (2), qui a mis fin à la liaison (4), et
**en ce que** le premier temps d'attente est plus court que le second temps d'attente.

2. Réseau de communication selon la revendication 1,
**caractérisé en ce que**
le premier abonné (1, 3) établit la liaison, et
**en ce que** le temps de liaison maximal (24, 25) dépend de la priorité des messages à transmettre (35-43) par le premier abonné (1, 3).

3. Réseau de communication selon la revendication 1 ou 2, **caractérisé en ce que**
le premier abonné (1, 3) alloue une priorité à la liaison (5, 6) selon la priorité des messages à transmettre (35-43) par le premier abonné (1, 3), et
**en ce que** le temps de liaison maximal (24, 25) dépend de la priorité de la liaison (5, 6).

4. Réseau de communication selon l'une des revendications 1 à 3, **caractérisé en ce que**
le premier abonné (1, 3) n'initie aucune liaison (4, 5) après la fin de la liaison (4, 5) pendant un troisième temps d'attente.

5. Réseau de communication selon l'une des revendications 1 à 4, **caractérisé en ce que**
le premier abonné (1, 3) n'initie aucune liaison (4, 5) après la fin de la liaison (4, 5) pendant un troisième temps d'attente, et
**en ce que** le troisième temps d'attente est plus court que le premier temps d'attente et que le second temps d'attente.

6. Réseau de communication selon l'une des revendications 1 à 5, **caractérisé en ce que**
le premier abonné (1, 3) et le second abonné (2) transmettent des messages de différentes priorités pendant une liaison (4, 5), et
**en ce que** le premier abonné (1, 3) définit la priorité de la liaison (4, 5) d'après la priorité la plus élevée des messages (35-43) qu'il doit transmettre ou d'après la moyenne des priorités des messages (35-43) qu'il doit transmettre.

7. Réseau de communication selon l'une des revendications 1 à 6, **caractérisé en ce que**
chaque abonné (1, 2, 3) possède un plan d'envoi (44), et
**en ce que** le planificateur d'envoi (44) trie les messages à envoyer (35-43) d'après leur destination et/ou leur priorité.

8. Réseau de communication selon la revendication 7, **caractérisé en ce que**
le planificateur d'envoi (44) définit la série de liaisons à établir (4, 5).

9. Procédé en vue d'une communication entre au moins un premier abonné (1, 2, 3) et un second abonné (1, 2, 3),
dans lequel une liaison respective (4, 5) est établie entre les abonnés (1, 2, 3) par paire,
dans lequel les messages (35-43) sont transmis au second abonné (1, 2, 3) par l'intermédiaire de la liaison (4, 5), et
dans lequel une priorité est allouée à chaque message (35-43) par un abonné (1, 2, 3),
dans lequel la liaison (4, 5) est terminée par au moins un abonné relié (2) après l'écoulement d'un temps de liaison maximal (24, 25),
dans lequel le temps de liaison maximal (24, 25) est déterminé selon la priorité des messages à transmettre (35-43),
dans lequel pendant un premier temps d'attente, aucune liaison (4, 5) n'est initiée vers l'autre abonné relié précédemment (1) par l'abonné (2), qui a mis fin à la liaison (4),
**caractérisé en ce que**
pendant un second temps d'attente, aucune liaison (4, 5) n'est initiée de l'autre abonné précédemment relié (1) vers l'abonné (2), qui a mis fin à la liaison (4), et
**en ce que** le premier temps d'attente est plus court que le second temps d'attente.

10. Procédé selon la revendication 9, **caractérisé en ce que**
la liaison (4, 5) est établie depuis le premier abonné (1, 3), et
**en ce que** le temps de liaison maximal (24, 25) est défini selon la priorité des messages à transmettre (35-43) par le premier abonné (1, 3).

11. Procédé selon la revendication 9 ou 10, **caractérisé en ce que**
une priorité est allouée par le premier abonné (1, 3) à la liaison (4, 5) selon la priorité des messages à transmettre par le premier abonné (1, 3), et
**en ce que** le temps de liaison maximal (24, 25) est défini par le premier abonné (1, 3) selon la priorité de la liaison (4, 5).

12. Procédé selon l'une des revendications 9 à 11, **caractérisé en ce que**
aucune liaison (4, 5) n'est initiée par le premier abonné (1, 3) après la fin de la liaison (4, 5) pendant un troisième temps d'attente.

13. Procédé selon l'une des revendications 9 à 12, **caractérisé en ce que**
aucune liaison n'est initiée par le premier abonné (1, 3) après la fin de la liaison (4, 5) pendant le troisième temps d'attente, et
**en ce que** le troisième temps d'attente est plus court que le premier temps d'attente et le deuxième temps d'attente.

14. Procédé selon l'une des revendications 9 à 13, **caractérisé en ce que**
des messages (35-43) de différentes priorités sont transmis entre le premier abonné (1, 3) et le second abonné (2) pendant une liaison (4, 5), et
**en ce que** la priorité de la liaison (4, 5) est définie par le premier abonné (1, 3) d'après la priorité la plus élevée des messages (35-43) à envoyer par le premier abonné (1, 3) ou d'après la moyenne des priorités des messages (35-43) à transmettre par le premier abonné (1, 3).

15. Procédé selon l'une des revendications 9 à 14, **caractérisé en ce que**
les messages à envoyer (35-43) sont triés d'après leur destination et/ou leur priorité.

16. Procédé selon la revendication 15, **caractérisé en ce que**
la série de liaisons à établir (4, 5) est déterminée par les abonnés (1, 2, 3).
